# EUROPEAN PATENT APPLICATION

(11) **EP 4 703 868 A1**
(43) Date of publication of application: **04.03.2026**
(21) Application number: 24196396.6
(22) Date of filing: 26.08.2024
(51) Int. Cl.: G06F 8/30, G06F 8/41, G05B 19/042

(54) **METHOD, AGENT, AND COMPUTER PROGRAM FOR IMPLEMENTING A CONTROL LOGIC INTO A CONTROL PLATFORM, CONTROL PLATFORM, AND TECHNICAL SYSTEM**

(71) Applicant: ABB Schweiz AG, 5400 Baden (CH)
(72) Inventor: MAAG, Balz, 8953 Dietikon (CH); SIVANTHI, Thanikesavan, 5303 Würenlingen (CH); HUANG, Pengcheng, 8006 Zürich (CH); COPPIK, Nicolas, 64293 Darmstadt (DE); HEUSCHKEL, Jens, 64331 Weiterstadt (DE); SCHEUSS, Oliver, 8046 Zurich (CH); SARANSAARI, Mikko, 8951 Fahrweid (CH)
(74) Representative: Sykora & König Patentanwälte PartG mbB

(57) **Abstract**

A method for implementing a control logic (38) into a control platform (22) for controlling a technical system (24) is described. The method comprises: receiving a query signal (50) from an input unit (30), wherein the query signal (50) is representative of a user query (28) and wherein the user query (28) describes at least one requirement which has to be fulfilled by the control logic (38); generating a functional code (52) from the query signal (50), wherein the functional code (52) comprises computer-readable instructions determined depending on the described requirements; determining a preliminary control logic (54) by allocating and scheduling the functional code (52) on the control platform (22), wherein the allocated and scheduled functional code (52) corresponds to the preliminary control logic (54); determining at least one profile of the preliminary control logic (54) by analysing the allocated and scheduled functional code (52); and optimizing the preliminary control logic (54) depending on the profile until the requirements are fulfilled and a parallelized functional code is achieved, wherein the parallelized functional code fulfilling the requirements represents the final control logic (38).

## Description

### FIELD OF THE INVENTION

The invention relates to the field of control platforms for controlling technical systems. In particular, the invention relates to a method, an agent, and a computer program for implementing a control logic into a control platform for controlling a technical system, the control platform, and the technical system.

### BACKGROUND OF THE INVENTION

Using control platforms to implement real-time applications, in particular real-time control logics, that are suited to end users' needs, and/or run on top of the core functionalities of the platform, is becoming more common. Such control logics typically run in an isolated and secure environment such that any failure in the control logic does not affect the overall control platform. This environment, also known as sandbox, can be realized as a process, virtual machine, or OS container, and may be developed by various entities, e.g., platform vendor, system integrator, or any 3rd party. Usually, users are provided with a Software Development Kit (SDK) which can be used to build and run their control logic in the sandbox.

It takes control engineers - who often aren't software experts - a solid grasp of the underlying control platform, of the middleware, of the operating system, and of real-time requirements to create a control logic that can meet functional and non-functional requirements such that the control logic may run on the control platform smoothly without disturbing other existing processes. However, control engineers and/or programmers having such a knowledge are rare and the tasks to be carried out by these engineers and/or, respectively, programmers are cumbersome and time consuming.

### DESCRIPTION OF THE INVENTION

It is an objective of the present invention to provide a method, an agent, and a computer program for implementing a control logic into a control platform for controlling a technical system, which enable to implement the control logic in an easy way and/or automatically, and/or which contribute to that the control logic fulfils one or more predetermined requirements. It is an objective of the present invention to provide the control platform including the agent, and the technical system including the control platform.

This objective is achieved by the subject-matter of the independent claims. Further exemplary embodiments are evident from the dependent claims and the following description.

A first aspect relates to a method for implementing a control logic into a control platform for controlling a technical system. The method comprises: receiving a query signal from an input unit, wherein the query signal is representative of a user query and wherein the user query describes at least one requirement which has to be fulfilled by the control logic; generating a functional code from the query signal, wherein the functional code comprises computer-readable instructions determined depending on the described requirements; determining a preliminary control logic by allocating and scheduling the functional code on the control platform, wherein the allocated and scheduled functional code corresponds to the preliminary control logic; determining at least one profile of the preliminary control logic by analyzing the allocated and scheduled functional code; and optimizing the preliminary control logic depending on the profile until the requirements are fulfilled and a parallelized functional code is achieved, wherein the parallelized functional code fulfilling the requirements represents the final control logic.

A second aspect relates to an agent for operating the control platform. The agent comprises: a memory for storing a user query, one or more requirements contained in the user query, a functional code, a preliminary control logic, and/or one or more profiles of the preliminary control logic; and a processor communicatively coupled to the memory and being configured for carrying out the method in accordance with one of the preceding claims.

A third aspect relates to a control platform for controlling a technical system. The control platform comprises: the agent as described above and in the following; an input unit communicatively coupled to the agent and being configured for providing a user query to the agent; and an interface unit coupled to the technical system and being configured for sending one or more control signals to the technical system and/or for receiving one or more measurement signals from the technical system.

A fourth aspect relates to a technical system. The technical system comprises: the control platform as described above and in the following; at least one technical device communicatively coupled to the control platform and having at least one sensor and/or at least one actuator being configured for communicating with the control platform.

A fifth aspect relates to a computer program for implementing the control logic into the control platform, the computer program comprising computer-readable instructions which, when being executed by the processor of the agent as described above and in the following carry out the method as described above and in the following. The computer program as described above and in the following may be stored on a computer-readable medium. The computer-readable medium may be a floppy disk, a hard disk, an USB storage system, a RAM, a ROM, an EPROM or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

The above method enables to help users of the control platform to develop and/or deploy the control logic very efficiently. The above aspects enable to implement the control logic in an easy way and/or automatically. In addition, these aspects contribute to that the control logic fulfils one or more of the requirements without the need for an engineer or programmer having a deep knowledge about programming and/or the control platform. This may contribute to that the responsibility of the control engineer, who is referred to as user in the following, is limited to defining the requirements to be fulfilled by the control logic. In particular, the functional code, which may be referred to as wrapper or glue code, that executes the control logic is automatically generated such that the requirements given by the user query of the user are met.

The method may be carried out by a processor of a computer, e.g., a general-purpose computer, or of the agent of the control platform. The control logic may be configured for running in a secure environment of the control platform, e.g., in a so-called sandbox of the control platform. The control logic may run in this secure environment because any failure in the functional code of the control logic does not affect the overall control platform in this case. Such sandboxes are well known in the art of control algorithms and may be realized as a process, a virtual machine, or an OS container. The sandbox may be developed by various entities, e.g., a platform vendor, a system integrator, or any third party. The control logic may be referred to as sandbox application in this context. The method, the general-purpose computer, and/or the agent may be referred to as sandbox application development assistant in this context. Alternatively, the control logic may be run in a less secure environment of the control platform.

The technical system may comprise one or more technical devices collaborating with each other, e.g., one or more drives, sensors, actuators, and/or a field bus of the technical system. For example, the one or more sensors may be provided for measuring one or more system or device parameters and for generating corresponding measurement signals. Alternatively or additionally, the drives may be coupled to corresponding ones of the actuators and may be configured for driving the respective actuators which in response carry out one or more actions.

The control platform may comprise at least one computer having a processor arrangement comprising at least one processor having at least one processor core, and at least one memory communicatively coupled to the processor arrangement. However, in the reality such control platforms often comprise two or more computers, one or more computers each having two or more processors, and/or one or more processors having two or more processor cores in order to provide the necessary processing power. The control platform may be or may comprise a drive control for driving one or more of the technical devices of the technical system and/or a gateway platform. The gateway platform may be a node that is able to connect the one or more technical devices of the technical system to the cloud to facilitate monitoring and management of the technical devices.

The input unit may be a component of the computer of the control platform or of another computer. The input unit may comprise a keyboard, a touchscreen, and/or a microphone. As such, the query may be input in the input unit in written or spoken form.

The query may be formulated in free text form, e.g., in form of prose or in form of keywords. The functional code may be generated in any suitable coding language, e.g., in C/C++ code, or IEC 61131-3 ST. One or more of the requirements described within the user query may be already fulfilled by the initial functional code before determining the preliminary control logic. Alternatively or additionally, one or more of the requirements may be fulfilled by the control logic at the end of or after the optimization.

The profile of the preliminary control logic may comprise different values characterizing correspondingly different properties of the preliminary control logic, in particular when running on the control platform. The properties may be two or more properties out of a group of properties, the group of properties comprising for e.g., whether the code runs without compromising the non-functional requirements, a CPU load, one or more application response times, deadlines of applications already running on the control platform, memory usage etc., wherein the values are representative of how good the corresponding property is achieved.

According to an embodiment, the functional code is generated by a Large Language Model (LLM) which has been trained by at least one data set out of a group of data sets, the group of data sets comprising one or more firmware codes for the technical system, one or more existing control logics for the control platform, one or more technical documentations of the technical system and/or the control platform. The LLM may be a ready to use LLM as it is known in the art and may be fine-tuned by the above training with the data sets. Alternatively, the LLM may be trained from the scratch by the above training with the data sets. The technical documentations of the technical system and/or the control platform may comprise a software architecture of the control platform and/or an API description of the secure environment, i.e., the sandbox, in which the control logic is considered to be run. This enables the LLM to learn core functionalities of the secure environment, and hence, allows it to generate the corresponding control logic.

According to an embodiment, generating the functional code, determining the preliminary control logic, determining the at least one profile of the preliminary control logic, and optimizing the preliminary control logic is carried out by an artificial intelligence or a machine learning algorithm which has been trained by at least one data set out of a group of data sets, the group of data sets comprising one or more firmware codes for the technical system, one or more existing control logics for the control platform, one or more technical documentations of the technical system and/or the control platform, one or more existing preliminary control logics, one or more profiles, and/or one or more parallelized functional codes, i.e., one or more control logics.

According to an embodiment, the at least one requirement which has to be fulfilled by the control logic is a functional requirement or a non-functional requirement; or the user query describes at least two requirements which have to be fulfilled by the control logic and at least one of these two requirements is a functional requirement and the other one is a non-functional requirement. The functional requirements may be related to instructions to the technical devices, in particular to the sensors, actuators, and/or drives of the technical devices of the technical system. The non-functional requirements may be related to constraints related to the control logic and/or on the system resources.

According to an embodiment, the one or more functional requirements are functional requirements out of a group of functional requirements, the group of functional requirements comprising a control instruction relating to a sensor of the technical system, a control instruction relating to an actuator of the technical system; and/or the one or more non-functional requirements are non-functional requirements out of a group of non-functional requirements, the group of non-functional requirements comprising information about the technical system and/or a hardware of the control platform, and settings related to the technical system and/or the control platform, deadlines of applications already running on the platform, an application timing and a processor usage. The processor usage may refer to a percentage of the processing power of the processor which may be used for running the control logic. The deadlines may refer to durations during which the functional code must be carried out by the corresponding processor(s).

According to an embodiment, allocating the functional code on the control platform comprises distributing the functional code across different processor cores of the control platform. The different processor cores could be arranged in one computer or in two or more different computers. The computer(s) may be a part of the control platform. Distributing the functional code over the processor cores and integrating them to the existing schedule of the control platform to obtain the preliminary control logic may be referred to as "parallelizing" the functional code and, respectively, allocation and scheduling. Before allocating and scheduling the functional code a static code analysis may be carried out. The static code analysis may be carried out to understand which parts of the functional code have to be allocated to which processor core and/or to different cores. The static code analysis is well known in the art. The static code analysis may comprise examining the corresponding code without executing the corresponding program. The process may provide an understanding of the structure of the functional code and may help to ensure that the functional code adheres to given industry standards. For example, a result of the static code analysis may refer to a tracing the flow of data within the code, determining the control flow within the code, analyzing the function calls within the code, etc.

According to an embodiment, the scheduling of the functional code comprises integrating the functional code within an existing schedule of the control platform.

According to an embodiment, integrating the functional code within an existing schedule of the control platform comprises assigning the functional code to one or more available task levels of the control platform and/or assigning the functional code to one or more priorities.

According to an embodiment, the at least one profile of the preliminary control logic is determined by executing the preliminary control logic and by determining the properties of the preliminary control logic, wherein the profile is representative of the determined properties.

According to an embodiment, the preliminary control logic is optimized depending on the profile by changing the allocation and schedule of the functional code, by determining another profile of the functional code and/or the corresponding preliminary control logic after the changes, by comparing the profiles determined before and after the changes, and by changing the allocation and schedule of the functional code again such that the corresponding preliminary control logic is parallelized and fulfils the requirements of the user query.

So, the preliminary control logic may be optimized in an iterative process in which each determined profile may serve as a benchmark for the next profile determined after changing the allocation and scheduling of the preliminary control logic. This process may be referred to as dynamic profiling. In general, dynamic profiling is a dynamic program analysis technique used to analyze the behavior of a piece of software while it's running. It provides a detailed overview of execution times of individual processes within the software code, memory allocations, CPU usage of different functions, and much more. In particular, the dynamic profiling enables to determine which parts of the control logic are compute intense and may need to be parallelized, assigned to different priorities and/or to different processor cores, to meet the requirements, in particular the non-functional requirements. The optimization may be carried out by an optimization algorithm based on heuristics or exact methods which find a very good, preferably an optimal distribution according to a non-functional requirement, e.g., minimizing a processor load of the processor. In this context, the exact methods may be referred to as exact algorithms. The exact algorithms always solve an optimization problem to optimality, e.g., as it is known in the art.

According to an embodiment, the preliminary control logic is optimized such an impact on available system resources of the control platform is reduced or minimized, and/or such that the resulting parallelized functional code, in other words the control logic, does not interfere with existing functionalities of the control platform. The available system resources of the control platform may refer to a processor load of a processor of the control platform and/or to a memory footprint of the preliminary control logic on a memory of the control platform. The functionalities of the control platform may refer to, e.g., core functionalities, e.g., related to core control algorithms of the control platform.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows an exemplary embodiment of an agent for a control platform, the control platform, and a technical system controlled by the control platform;
Fig. 2 shows an example of a task level of the control platform.
Fig. 3 shows an example of a task level according to figure 2 and an example of an additional task level of the control platform.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

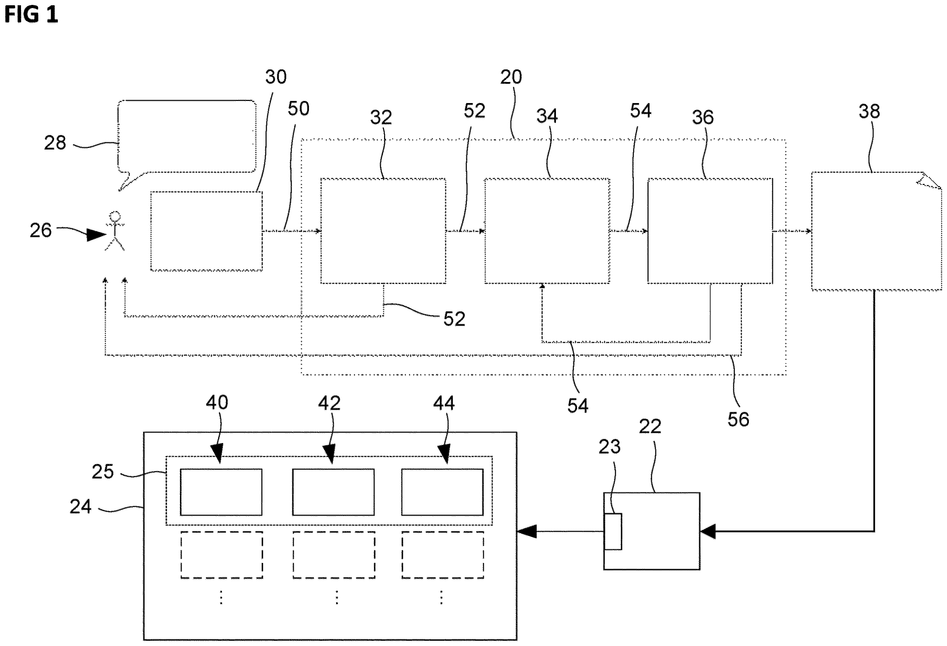

Fig. 1 shows an exemplary embodiment of an agent 20 for a control platform 22, the control platform 22, and a technical system 24 controlled by the control platform 22. The agent 20 may be embodied within the control platform 22 or may be separate from the control platform 22. The control platform 22 may be embodied within the technical system 24.

The agent 20 may be a general-purpose computer couplable to the control platform 22. The agent 20 may be configured for operating the control platform 22. The agent comprises a memory and a processor (not shown). The memory may be configured for storing a user query 28 of a user 26, one or more requirements contained in the user query 28, a functional code 52, a preliminary control logic 54, and/or one or more profiles of the preliminary control logic 54. The processor may be communicatively coupled to the memory and may be configured for implementing a control logic 38 into the control platform 22 for controlling the technical system 24. In addition, the agent 20 may comprise a code generator 32, an Allocating and Scheduling(AS)-unit 34, and a profiler 36.

The control platform 22 is configured for controlling the technical system 24. In the embodiment shown in figure 1, the agent 20 is arranged separately from the control platform 22. However, in an alternative embodiment, the agent 20 may be implemented within the control platform 22. In addition, the control platform 22 may comprise an input unit 30 and an interface unit 23. The input unit 30 may be communicatively coupled to the agent 20 and may be configured for providing the user query 28 to the agent 20. The input unit 30 may be a component of the agent 20 of the control platform 22 or of another computer, e.g., a general-purpose computer. The input 30 unit may comprise a keyboard, a touchscreen, and/or a microphone. The interface unit 23 may be coupled to the technical system 24 and may be configured for sending one or more control signals to the technical system 24 and/or for receiving one or more measurement signals from the technical system 24.

In the embodiment shown in figure 1, the control platform 22 is arranged separately from the technical system 24. However, in an alternative embodiment, the control platform 22 may be a part of the technical system 24. In addition, the technical system 24 may comprise at least one technical device 25. The technical device 25 may be communicatively coupled to the control platform 22 and may have at least one sensor 40, at least one actuator 42 being configured for communicating with the control platform 22, at least one drive 44 for driving the actuator 42, and/or a field bus of the technical system. The actuator 42 may be a relay, a motor, or a pump, for example. The sensor 40 may be a current sensor, a voltage sensor, a temperature sensor, a pressure sensor, or a photosensitive sensor. For example, the one or more sensors may be provided for measuring one or more technical system or technical device parameters and for generating corresponding measurement signals. The drives 44 may be coupled to corresponding ones of the actuators 42 and may be configured for driving the respective actuators 42 which in response carry out one or more actions.

When the user 26 wants to implement a new control logic 38 within the control platform 22, the user 26 may formulate the user query 28. The user query 28 describes at least one requirement which has to be fulfilled by the new control logic 38. The user query 28 may be formulated in free text form, e.g., in form of prose or in form of keywords. The user query 28 may be input in the input unit 30 in written or spoken form. The input unit 30 generates a query signal 50 from the input user query 28. The query signal 50 is representative of the user query 28. The new control logic 38 may be an independent control algorithm or may be configured for controlling and/or running an already existing control algorithm.

The at least one requirement which has to be fulfilled by the control logic 38 may be a functional requirement or a non-functional requirement. Alternatively, the user query 28 may describe at least two requirements which have to be fulfilled by the control logic 38 and at least one of these two requirements is a functional requirement, and the other one is a non-functional requirement. The functional requirements may be related to instructions to the technical devices 25, in particular to the sensors 40, actuators 42, and/or drives 44 of the technical devices 25 of the technical system 24. The non-functional requirements may be related to constraints related to the control logic 38 and/or on the system resources of the control platform 22.

Optionally, the one or more functional requirements may be functional requirements out of a group of functional requirements. The group of functional requirements may comprise one or more control instructions relating to one or more of the sensors 40 of the technical system 24, one or more control instructions relating to one or more actuators 42 of the technical system 24,. Alternatively or additionally, the non-functional requirements may be non-functional requirements out of a group of non-functional requirements. The group of non-functional requirements may comprise information about the technical system 24 and/or a hardware of the control platform 22, settings related to the technical system 24 and/or the control platform 22, and deadlines of applications already running on the control platform 22, an application timing for the control logic 38 and a processor usage of the control logic 38. The processor usage may refer to a percentage of the processing power of the processor which may be used for running the control logic 38. The deadline may refer to a duration during which the control logic 38 must be carried out by the corresponding processor(s).

For example, a user query 28 formulated in free text form and containing two non-functional requirements may be: "Write a control logic that runs an already existing control algorithm every 1ms with per core processor usage not more than 3%". So, the control logic 38 may be used to control and/or run an already existing control algorithm. An alternative user query 28 in free text form relating to two functional requirements may be: "Write a sandbox application that samples all available drive current sensors every 500µs and calculates the torque reference". In this context, the whole control logic 38 corresponding to the requested sandbox application may be generated and may run independently from any existing control algorithms of the control platform 22. In addition, the user query 28 may also specify system related settings, such as, e.g., the specific hardware of the control platform.

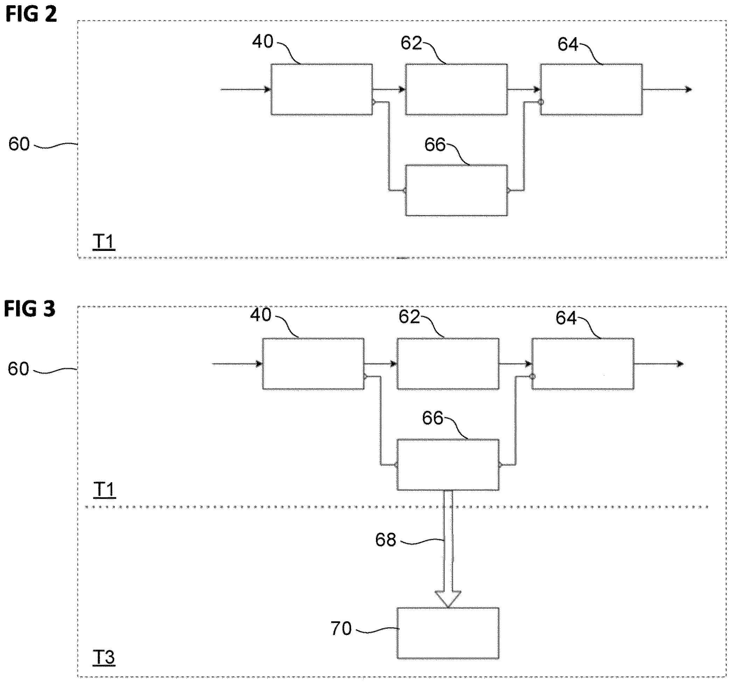

The control logic 38 may be configured for running in a secure environment of the control platform 22, e.g., in a so-called sandbox 60 of the control platform 22 (see figure 2). The sandbox 60 may be realized as a process, a virtual machine, or an OS container. Alternatively, the control logic 38 may be run in a less secure environment of the control platform 22.

The agent 20, in particular the code generator 32, may receive the query signal 50 from the input unit 30. The code generator 32 may generate a functional code 52 from the query signal 50. The functional code 52 may comprise computer-readable instructions determined depending on the requirement(s) described within the user query 28. The functional code 52 may be generated in any suitable coding language, e.g., in C/C++ code, or IEC 61131-3 ST.

The functional code 52 may be generated by a Large Language Model (LLM) which has been trained by at least one data set out of a group of data sets, the group of data sets comprising one or more firmware codes for the technical system 24, one or more existing control logics 38 for the control platform 22, one or more technical documentations of the technical system 24 and/or the control platform 22. The LLM may be a ready to use LLM as it is known in the art and may be fine-tuned by the above training with the data sets. Alternatively, the LLM may be trained from the scratch by the above training with the data sets. The technical documentations of the technical system 24 and/or the control platform 22 may comprise a software architecture of the control platform 22 and/or an API description of the secure environment, i.e., the sandbox 60, in which the control logic 38 is considered to be run. This enables the LLM to learn core functionalities of the secure environment, and hence, allows it to generate the corresponding control logic 38.

The AS-unit 34 may receive the functional code 52 from the code generator 32. The AS-unit 34 may determine a preliminary control logic 54 by allocating and scheduling the functional code 52 on the control platform 22, or on a simulation of the control platform 22, wherein the allocated and scheduled functional code 52 corresponds to the preliminary control logic 54. The functional code 52 may be allocated on the control platform 22 by distributing the functional code 52 across different processor cores and the existing schedule of the control platform 22. The different processor cores could be arranged in one computer or in two or more different computers. The computer(s) may be a part of the control platform 22. Distributing the functional code over the processor cores and integrating them to the existing schedule of the control platform may be referred to as "parallelizing" the functional code 52. The functional code may be integrated within an existing schedule of the control platform 22 by assigning the functional code 52 to one or more available task levels T1, T3 (see figure 3) of the control platform 22 and/or assigning the functional code 52 to one or more priorities, as explained with respect to figure 3.Before allocating and scheduling the functional code 52 a static code analysis of the functional code 52 may be carried out on, in particular by the AS-unit 34. The static code analysis may comprise examining the corresponding functional code 52 without executing the functional code 52. The process may provide an understanding of the structure of the functional code 52 and can help ensure that the functional code 52 adheres to industry standards. For example, a result of the static code analysis may refer to determining the control flow within the code, analyzing the function calls within the code, tracing the flow of data within the code, etc.

The profiler 36 may determine at least one profile of the preliminary control logic 54 by executing the preliminary control logic 54 and by determining the properties of the preliminary control logic 54, wherein the profile is representative of the determined properties. The profile of the preliminary control logic 54 may comprise different values characterizing correspondingly different properties of the preliminary control logic 54, in particular when running on the control platform 22. The properties may be two or more properties out of a group of properties. The group of properties comprises an, whether the preliminary control logic 54 runs without compromising the non-functional requirements, a CPU load when running the preliminary control logic 54, one or more application response times when running the preliminary control logic 54, deadlines of applications already running on the control platform 22, memory usage etc., wherein the values are representative of how good the corresponding property is achieved. In addition, the profiler 36 may evaluate whether the non-functional requirements are fulfilled based on the determined profile and/or the determined properties. When all non-functional requirements are fulfilled, the profiler 36 may output the control logic 38.

Then, the preliminary control logic 54 may be optimized depending on the profile until the requirements are fulfilled and a parallelized functional code is achieved, wherein the parallelized functional code fulfilling the requirements represents the final control logic 38. The preliminary control logic 54 may be optimized by an iterative process in which the preliminary control logic 54 is feed back into the AS-unit 34 which changes the allocation and/or the scheduling of the preliminary control logic 54 and forwards the correspondingly changed preliminary control logic 54 to the profiler 36 for determining a profile of the changed preliminary control logic 54. Then, the profiles determined before and after the changes may be compared with each other and within the next iteration the allocation and schedule of the functional code 52 is changed again until the preliminary control logic 54 is parallelized and fulfils the requirements of the user query 28. So, each determined profile may serve as a benchmark for the next profile determined after changing the allocation and scheduling of the preliminary control logic 54 by the AS-unit 34. This process may be referred to as dynamic profiling. The dynamic profiling enables to determine which parts of the control logic are compute intense and may need to be parallelized, assigned to different priorities and/or to different processor cores, to meet the requirements, in particular the non-functional requirements. The optimization may be carried out by an optimization algorithm based on heuristics or exact methods which finds a very good, preferably an optimal distribution according to a non-functional requirement, e.g., minimizing a processor load of the processor.

The preliminary control logic 54 may be optimized such that any of its impact on available system resources of the control platform 22 is reduced or minimized, and/or such that the resulting parallelized control logic 38 does not interfere with existing functionalities of the control platform 22. The available system resources of the control platform 22 may refer to a processor load of the processor(s) of the control platform 22 and/or to a memory footprint of the preliminary functional code 54 on the memory of the control platform 22. The functionalities of the control platform 22 may refer to core functionalities, e.g., related to core control algorithms of the control platform 22.

One or more of the requirements described within the user query 28 may be already fulfilled by the initial functional code 52 before determining the preliminary control logic 54, e.g., one or more of the functional requirements. Alternatively or additionally, one or more of the requirements may be fulfilled by the control logic 38 at the end of or after the optimization e.g., one or more of the non-functional requirements.

Optionally, generating the functional code, determining the preliminary control logic, determining the at least one profile of the preliminary control logic, and optimizing the preliminary control logic may be carried out by an artificial intelligence or a machine learning algorithm which has been trained by at least one data set out of a group of data sets, the group of data sets comprising one or more firmware codes for the technical system 24, one or more existing control logics 38 for the control platform 22, one or more technical documentations of the technical system 24 and/or the control platform 22, one or more existing preliminary control logics 54, one or more profiles, and/or one or more parallelized functional codes.

The code generator 32, the AS-unit 34, and/or the profiler 36 may be embodied as software, as hardware, or as a combination of software and hardware. The software may be or may comprise a computer program for implementing the control logic 38 into the control platform 22. The computer program may comprise computer-readable instructions which, when being executed by the processor of the agent 20 as described above and in the following, carry out the method as described above in context with the description of the functions of the code generator 32, the AS-unit 34, and the profiler 36. The computer program may be stored on a computer-readable medium. The computer-readable medium may be a floppy disk, a hard disk, an USB storage system, a RAM, a ROM, an EPROM or a FLASH memory. The computer readable medium may also be a data communication network, e.g. the Internet, which allows downloading a program code. In general, the computer-readable medium may be a non-transitory or transitory medium.

Optionally, a feedback signal 56 may be generated and sent to the user 26. The feedback signal may be representative of the preliminary control logic 54 and/or the profile, in particular the properties. In this case the user 26 has the option to adapt the preliminary control logic 54 and/or to adapt the user query 28 in order to achieve the desired functionality and/or profile.

Fig. 2 shows an example of a task level of the control platform 22. In particular, figure 2 shows a first task level T1, wherein tasks in the first task level T1 may be executed at the highest priority. The first task level T1 is depicted as part of the secure environment, i.e., the sandbox 60, in which the preliminary control logic 54 is optimized.

In the example of figure 2, the technical device 25 may be a motor and the sensor 40 may be arranged as a motor observer. The sensor 40 may receive an instruction signal, wherein the sensor 40 and the instruction signal may be configured such that the sensor 40 carries out a corresponding measurement and captures a corresponding measured value, e.g., an actual speed of the motor. The measured value may be forwarded to a speed controller 62 which may determine a reference value, e.g., a torque reference value, depending on the measured value. The reference value may be forwarded to a torque and/or current controller 64. The torque/current controller 64 may determine a current to be provided to the motor such that the motor may achieve a torque corresponding to the torque reference value. An advanced speed control 66 may be implanted as the control logic 38. However, due to slow calculations 68 of the advanced speed control 66 within the first task level T1, the main control of the control platform 22 may get disturbed.

In general, due to strict timing requirements of the functionalities of the processor core(s), sandbox applications as the control logic 38 need to adhere to a schedule already existing in the control platform 22. This means, that the individual functionalities need to be distributed to the available periodic task levels and/or priorities. For example, time intensive computations must not run at priority levels, where they can interfere with the timing requirements of core functionalities. Consequently, it is important to find the optimal distribution of the control logic 38 to the available task levels T1, T2. This may be done by thoroughly benchmarking and optimizing the distribution in an iterative process, as explained above. The benchmarking may be performed using the dynamic profiling, as explained above, to determine which parts of the control logic 38 may be compute intense and may need to be run at lower priorities, e.g., in a third task level T3 (see figure 3). An optimization algorithm based on heuristics or exact methods, as known in the art, may find the optimal distribution according to a predetermined optimization target, e.g., minimizing the CPU load.

Figure 3 shows an example of the first task level T 1 according to figure 2 and an example of an additional task level, i.e., the third task level T3, of the control platform 22. In particular, figure 3 shows an example where the slow calculations 68 of the advanced speed control 66 running in the sandbox 60 are offloaded from the high priority first task level T1 to the lower priority third task level T3, wherein the slow calculations 68 are carried out at the third task level T3 by a calculator 70. With this distribution of the control logic 38, the main control of the control platform 22 does not get disturbed anymore.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or agent or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**LIST OF REFERENCE SYMBOLS**

| | |
|---|---|
| Agent | 20 |
| Control platform | 22 |
| Interface unit | 23 |
| Technical system | 24 |
| Technical device | 25 |
| User | 26 |
| User query | 28 |
| Input unit | 30 |
| Code generator | 32 |
| AS-unit | 34 |
| Profiler | 36 |
| Control logic | 38 |
| Sensor | 40 |
| Actuator | 42 |
| Drive | 44 |
| Query signal | 50 |
| Functional code | 52 |
| Preliminary control logic | 54 |
| Feedback signal | 56 |
| Sandbox | 60 |
| Speed controller | 62 |
| Torque/current controller | 64 |
| Advanced speed control | 66 |
| Slow calculations | 68 |
| Calculator | 70 |
| Task level | T1, T3 |

## Claims

1. A method for implementing a control logic (38) into a control platform (22) for controlling a technical system (24), the method comprising:
receiving a query signal (50) from an input unit (30), wherein the query signal (50) is representative of a user query (28) and wherein the user query (28) describes at least one requirement which has to be fulfilled by the control logic (38);
generating a functional code (52) from the query signal (50), wherein the functional code (52) comprises computer-readable instructions determined depending on the described requirements;
determining a preliminary control logic (54) by allocating and scheduling the functional code (52) on the control platform (22), wherein the allocated and scheduled functional code (52) corresponds to the preliminary control logic (54);
determining at least one profile of the preliminary control logic (54); and
optimizing the preliminary control logic (54) depending on the profile until the requirements are fulfilled and a parallelized functional code is achieved, wherein the parallelized functional code fulfilling the requirements represents the final control logic (38).

2. The method according to claim 1, wherein
the functional code (52) is generated by a Large Language Model which has been trained by at least one data set out of a group of data sets, the group of data sets comprising one or more firmware codes for the technical system (24), one or more existing control logics (38) for the control platform (22), one or more technical documentations of the technical system (24) and/or the control platform (22).

3. The method according to claim 1, wherein
generating the functional code (52), determining the preliminary control logic (54), determining the at least one profile of the preliminary control logic (54), and optimizing the preliminary control logic (54) is carried out by an artificial intelligence or a machine learning algorithm which has been trained by at least one data set out of a group of data sets, the group of data sets comprising one or more firmware codes for the technical system (24), one or more existing control logics (38) for the control platform (22), one or more technical documentations of the technical system (24) and/or the control platform (22), one or more existing preliminary control logics (54), one or more profiles, and/or one or more parallelized functional codes.

4. The method according to one of the preceding claims, wherein
the at least one requirement which has to be fulfilled by the control logic (38) is a functional requirement or a non-functional requirement; or
the user query (28) describes at least two requirements which have to be fulfilled by the control logic (38) and at least one of these two requirements is a functional requirement and the other one is a non-functional requirement.

5. The method according to claim 4, wherein
the one or more functional requirements are functional requirements out of a group of functional requirements, the group of functional requirements comprising a control instruction relating to a sensor (40) of the technical system (24), a control instruction relating to an actuator (42) of the technical system (24), and/or
the one or more non-functional requirements are non-functional requirements out of a group of non-functional requirements, the group of non-functional requirements comprising information about the technical system (24) and/or a hardware of the control platform (22), and settings related to the technical system (24) and/or the control platform (22), deadlines of applications already running on the platform, an application timing and a processor usage.

6. The method according to one of the preceding claims, wherein
the allocating the functional code (52) on the control platform (22) comprises distributing the functional code (52) across different processor cores of the control platform (22).

7. The method according to one of the preceding claims, wherein
the scheduling of the functional code (52) comprises integrating the functional code (52) within an existing schedule of the control platform (22).

8. The method according to claim 7, wherein
integrating the functional code (52) within an existing schedule of the control platform (22) comprises assigning the functional code (52) to one or more available task levels (T1, T3) of the control platform (22) and/or assigning the functional code (52) to one or more priorities.

9. The method according to one of the preceding claims, wherein
the at least one profile of the preliminary control logic (54) is determined by executing the preliminary control logic (54) and by determining the properties of the preliminary control logic (54), wherein the profile is representative of the determined properties.

10. The method according to one of the preceding claims, wherein
the preliminary control logic (54) is optimized depending on the profile by changing the allocation and/or schedule of the functional code (52), by determining another profile of the preliminary control logic (54) after the changes, by comparing the profiles determined before and after the changes, and by changing the allocation and/or the schedule of the functional code (52) again such that the preliminary control logic (54) is parallelized and fulfils the requirements of the user query (28).

11. The method according to one of the preceding claims, wherein
the preliminary control logic (54) is optimized such an impact on available system resources of the control platform (22) is reduced or minimized, and/or such that the resulting parallelized functional code does not interfere with existing functionalities of the control platform (22).

12. An agent (20) for operating a control platform (22), the agent comprising:
a memory for storing a user query (28), one or more requirements contained in the user query (28), a functional code (52), a preliminary control logic (54), and/or one or more profiles of the preliminary control logic (54); and
a processor communicatively coupled to the memory and being configured for carrying out the method in accordance with one of the preceding claims.

13. A control platform (22) for controlling a technical system (24), the control platform (22) comprising: the agent (20) in accordance with claim 12;
an input unit (30) communicatively coupled to the agent (20) and being configured for providing a user query (28) to the agent (20); and
an interface unit (23) coupled to the technical system (24) and being configured for sending one or more control signals to the technical system (24) and/or for receiving one or more measurement signals from the technical system (24).

14. A technical system (24), comprising:
the control platform (22) according to claim 13;
at least one technical device (25) communicatively coupled to the control platform (22) and having at least one sensor (42) and/or at least one actuator (42) being configured for communicating with the control platform (22).

15. A computer program for implementing a control logic (38) into a control platform (22), the computer program comprising computer-readable instructions which, when being executed by a processor of an agent (20) according to claim 12, carry out the method in accordance with one of claims 1 to 11.
